(19) Europäisches Patentamt

European Patent Office

Office européen des brevets

(11) **EP 0 516 203 B1**

(12) **EUROPEAN PATENT SPECIFICATION**

(45) Date of publication and mention
of the grant of the patent:
**25.09.2002 Bulletin 2002/39**

(51) Int Cl.[7]: **C08F 297/00**, C08F 8/08,
C09J 153/00, C09D 153/00

(21) Application number: **92201176.2**

(22) Date of filing: **27.04.1992**

(54) **Cross-linked epoxy functionalized polydiene block polymers, process to prepare them, adhesive compositions and starting block copolymer**

Vernetzte Diolefinblockpolymerisate, welche funktionelle Epoxygruppen enthalten, Verfahren zu ihrer Herstellung, Klebstoffzusammensetzungen und Ausgangsblockkopolymer

Polymères bloc de diène réticulés ayant des groupes fonctionnels d'epoxide, procédé pour leur préparation, compositions adhésives et copolymère bloc inital

(84) Designated Contracting States:
**BE DE FR GB IT NL**

(30) Priority: **29.04.1991 US 692839**
**07.10.1991 US 772172**

(43) Date of publication of application:
**02.12.1992 Bulletin 1992/49**

(73) Proprietor: **KRATON Polymers Research B.V.**
**1031 CM Amsterdam (NL)**

(72) Inventors:
• **Erickson, James Robert**
**Katy, Texas 77450 (US)**
• **St. Clair, David John**
**Houston, Texas 77079 (US)**

(74) Representative:
**Kortekaas, Marcellinus C. J. A. et al**
**KRATON Polymers Research B.V.,**
**P.O. Box 37666**
**1030 BH Amsterdam (NL)**

(56) References cited:
**EP-A- 0 398 758      JP-A- 63 142 056**
**US-A- 3 970 608      US-A- 4 051 199**
**US-A- 4 135 037**

• **A. REISER: "Photoreactive Polymers (The Science and Technology of Resists)", , J. WILEY & SONS, NY**

## EP 0 516 203 B1

**Description**

This invention relates to cross-linked epoxy functionalized polydiene block polymers, processes to prepare them, adhesive compositions containing them and specific epoxy functionalized polydiene block copolymers.

Curing of adhesives based on conjugated dienes and, optionally including vinyl aromatics has increased the range of service properties for these adhesives. Radiation curing and chemical curing are known. This curing causes covalent cross-linking of the polymerized conjugated dienes which is evidenced by a high gel content of the cross-linked polymer. Before cross-linking, the polymers are melt processable but after cross-linking, the gels can not be processed as melts. Cross-linking therefore enhances solvent resistance and improves elevated temperature shear properties. The compositions can therefore be applied to a substrate in a melt and then cross-linked to form a superior adhesive. However, improvements in the adhesives could be made if the adhesives could be cured at lower dosages of radiation or lower levels of chemical curing agents.

Further, the known curable adhesives which are based on conjugated diene block copolymers do not have particularly good long term heat, weather and ultraviolet stability due to the need to utilize unhydrogenated polymers having one residual aliphatic double bond per polymerized unit. The known vinyl aromatic-conjugated diene block copolymer based adhesives which are curable are unhydrogenated polymers. Hydrogenation is known to improve long term heat, weather and ultraviolet stability, but it removes the double bonds which are needed to effect the curing. Such curing methods are not effective when the polymers are hydrogenated. The requirement for this unsaturation is particularly evident when typical tackifiers are present in the composition because their presence generally inhibits radiation cross-linking of the hydrogenated polymer.

EP 0 498 426 is prior art pursuant to Art. 54(3) EPC. It describes epoxidized linear or branched block copolymers. It does not disclose cross-linked epoxidized diene block copolymers. Further, it does not disclose epoxidized block copolymers having hydrogenated diene blocks A and B, wherein the A blocks have a greater number of tertiary unsaturation sites per unit of block mass than do the B blocks.

It is therefore an object of the present invention to provide a cross-linked polymer which is melt processable before cross-linking and has a high gel content after cross-linking. In another aspect, it is an object to provide a process to prepare this cross-linked polymer. In yet another aspect, it is an object of this invention to provide an adhesive composition which is melt processable before cross-linking and which has a high gel content after cross-linking.

It is also an object of the present invention to provide a block copolymer which can be modified so that it can be cross-linked preferably by radiation and which is easily melt processable before cross-linking but has a high gel content after cross-linking.

This invention provides a cross-linked epoxidized diene block copolymer which is obtainable by a process comprising the steps of:

(a) providing a block copolymer comprising diene monomer units;
(b) partially hydrogenating the base polymer to a residual content of aliphatic double bonds of 0.2 to 2 milliequivalents per gram of polymer;
(c) contacting the partially hydrogenated diene block copolymer with a peroxyacid to form an epoxidized polymer having between 0.1 and 5 milliequivalents of epoxide per gram of polymer, preferably 0.2 to 1.0 milliequivalents of epoxide per gram of polymer; and
(d) chemically or by means of radiation energy crosslinking the epoxidized polymer through at least some of the epoxy functionality to form a crosslinked polymer which has sufficient gel content to provide increased resistance to temperature and/or organic solvents.

According to the present invention, the cross-linking is achieved by radiation curing, which may be by either ionizing or non-ionizing radiation. This cross-linked polymer is an excellent adhesive, sealant or coating either by itself or when formulated with other ingredients.

The epoxidized polymer of this invention, before cross-linking, may be processed as a thermoplastic elastomer. Upon application as a film to a substrate, this polymer is cross-linked, resulting in a cross-linked adhesive having a high content of insoluble gel and a low modulus.

Block polymers containing ethylenic unsaturation can be prepared by copolymerizing one or more olefins, including at least one conjugated diene, by themselves or with one or more alkenyl aromatic hydrocarbon monomers. The copolymers may or may not be tapered, individual blocks may be homopolymers or random copolymers, and the polymer molecule may be linear or branched, including symmetric and asymmetric radial and star branch polymers.

The polymers containing ethylenic unsaturation or both aromatic and ethylenic unsaturation may be prepared using anionic or cationic initiators or polymerization catalysts. Such polymers may be prepared using bulk, solution or emulsion techniques. In any case, the polymer containing at least ethylenic unsaturation will, generally, be recovered as a liquid or a solid such as a crumb, a powder, or a pellet. Polymers containing ethylenic unsaturation and polymers containing both aromatic and ethylenic unsaturation are available commercially from several suppliers.

In general, the polymers containing ethylenic unsaturation or both aromatic and ethylenic unsaturation may be prepared by any method known in the art, such as those methods described in e.g. U.S. Patents Nos. 3,251,905; 3,390,207; 3,265,765; 3,639,521; 3,598,887; 4,219,627 and 4,208,356.

Conjugated dienes which may be polymerized include those containing from 4 to 24 carbon atoms, such as 1,3-butadiene, isoprene, piperylene, methylpentadiene, phenylbutadiene, 3,4-dimethyl-1,3-hexadiene, 4,5-diethyl-1,3-octadiene and the like. Isoprene and butadiene are the preferred conjugated diene monomers for use in the present invention because of their low cost and ready availability.

Alkenyl aromatic hydrocarbons which may be copolymerized include vinyl aromatic compounds such as styrene, various alkyl-substituted styrenes, alkoxy-substituted styrenes, vinyl napthalene, alkyl-substituted vinyl napthalenes and the like. Conjugated dienes can also be copolymerized with methacrylates, such as t-butyl methacrylate, as described in U.S. Patent 5,002,676, and such copolymers can be partially hydrogenated and epoxidized as described herein.

Other olefins which can be used are ethylene, propylene, 1-butene, 1-pentene, 1-hexane, 1-dodecene, etc. Other examples of mono-olefins and non-conjugated dienes are given in Table 3.6 of J. P. Kennedy, E. Marechal, Carbocationic Polymerization, (1982).

In general, any of the solvents known in the prior art to be useful in the preparation of such polymers may be used. Suitable solvents, then, include straight- and branched chain hydrocarbons such as pentane, hexane, heptane, octane and the like, as well as, alkyl-substituted derivatives, thereof; cycloaliphatic hydrocarbons such as cyclopentane, cyclohexane, cycloheptane and the like, as well as alkyl-substituted derivatives thereof; aromatic and alkyl-substituted derivatives thereof; aromatic and alkyl-substituted aromatic hydrocarbons such as benzene, napthalene, toluene, xylene and the like; hydrogenated aromatic hydrocarbons such as tetralin, decalin and the like; linear and cyclic ethers such as methyl ether, methylethyl ether, diethyl ether, tetrahydrofuran and the like.

In a preferred embodiment, the polymers of the present invention are made by the anionic polymerization of conjugated diene monomers and alkenyl aromatic hydrocarbon monomers in a hydrocarbon solvent at a temperature between 0 to 100°C using an alkyl lithium initiator. The living polymer chains are usually coupled by addition of divinyl monomer to form a star polymer. Additional monomers may or may not be added to grow more branches or to terminally functionalize the polymer and the living chain ends are quenched with a proton source.

The block copolymer of this invention, which may be partially hydrogenated, initially contains residual aliphatic double bonds in the polymer. The residual aliphatic double bonds provide excellent sites for reaction with an organic peracid to form epoxide functionality in the polymer. This type of epoxide is readily cured by radiation.

Preparation of polymers which have controllable and predictable amounts of residual aliphatic double bonds is disclosed in U.S. Patent No. 4,879,349. The process of this patent includes copolymerizing substituted and unsubstituted conjugated dienes and then hydrogenating the copolymer under conditions which are effective to substantially hydrogenate the ethylenic unsaturation which is unsubstituted, but leave the substituted ethylenic unsaturation substantially unhydrogenated. Partial hydrogenation utilizing the process described in said patent is preferred because of the excellent controllability of the amount of residual aliphatic double bonds (ADB's).

According to a preferred preparation route for selectively hydrogenated polymers, initially prepared living polymers are terminated by hydrogen and hydrogenation is performed by using a titanium (dicyclopentadienyl) hydrogenation catalyst.

The polymer is partially hydrogenated prior to epoxidation. The partial hydrogenation of the conjugated diene is done to leave 0.2 to 2 milliequivalents of ADB's per gram of block copolymer, because high values of epoxidation are neither necessary or usually desirable and residual ADB's left after epoxidation are potential sources for polymer degradation.

The epoxidized block copolymers may have weight average molecular weights of from 3,000 to 3,000,000. Lower molecular weights require excessive cross-linking whereas higher molecular weights are very difficult to apply to a substrate by melt or other means. In one preferred embodiment of the present invention the polymer has a weight average molecular weight of from 15,000 to 2,000,000, and more preferably from 40,000 to 1,000,000 because this offers the best balance between cost, ability to use the mildest curing conditions and achieving good application behaviour. It is preferred that the blocks comprising predominantly conjugated diene monomer units have molecular weights between 300 and 200,000 prior to epoxidation and, if present, the blocks comprising predominantly vinyl aromatic monomer units have molecular weights between about 500 and 50,000, because polymers built from larger blocks are very difficult to apply and smaller blocks fail to adequately localize covalent or physical cross-linking. Molecular weights of linear polymers or unassembled linear segments of polymers such as mono-, di-, triblock, and etc., arms of star polymers before coupling are conveniently measured by Gel Permeation Chromatography (GPC). A good method to use for a star shaped polymer is to measure the weight average molecular weight by light scatter-ing techniques, as described in e.g.

1. <u>Modern Size-Exclusion Liquid Chromatography</u>, W.W. Yau, J.J. Kirkland, D.D. Bly, John Wiley & Sons, New York, NY 1979.
2. Light Scattering from Polymer Solutions, M.B. Huglin, ed., Academic Press, New York, NY, 1972.
3. W. Kaye and A.J. Havlik, Applied Optics, 12, 541 (1973).
4. M.L. McConnell, American Laboratory, 63, May, 1978.

In another preferred embodiment the present invention relates to an epoxidized diene block copolymer which is obtainable by a process comprising the steps of:

(a) providing a block copolymer having the general formula

$$(A\text{-}B\text{-}A_p)_n\text{-}Y_r\text{-}(A_q\text{-}B)_m \qquad (I)$$

wherein Y is the residue of a coupling agent or a coupling monomer; A and B are polymer blocks which may be homopolymer blocks of conjugated diene monomers, copolymer blocks of conjugated diene monomers or copolymer blocks of conjugated diene monomers and monoalkenyl aromatic hydrocarbon monomers, wherein the A blocks have a greater number of tertiary unsaturation (TU) sites per unit of block mass than the B blocks, where a TU site is an aliphatic double bond (ADB) between a tertiary carbon atom and either a primary or secondary carbon atom; the A blocks have a molecular weight of from 100 to 3,000, preferably from 300 to 2,000, and the B blocks have a molecular weight of from 1000 to 15,000, preferably from 2,000 to 10,000; n is greater than 0, r is 0 or 1, m is greater than or equal to 0, n + m ranges from 1 to 100 and p and q are 0 or 1;
(b) partially hydrogenating the base polymer to a residual content of aliphatic double bonds of 0.2 to 2 milliequivalents per gram of polymer;
(c) contacting the partially hydrogenated diene block copolymer with a peroxy acid to form an epoxidized polymer having between 0.1 and 5 milliequivalents of epoxide per gram of polymer, preferably 0.2 to 1.0 milliequivalents of epoxide per gram of polymer. The epoxidized polymer preferably contains 0.5 or less milliequivalents aliphatic double bonds per gram of polymer.

The molecular weight of the A blocks varies from 100 to 3,000 because this molecular weight provides an adequate number of carbon to carbon double bonds (TU sites) that resist hydrogenation and/or allow easier functionalization, such as epoxidation, and subsequent cross-linking. The molecular weights of the B blocks range from 1,000 to 15,000 to provide flexible, short polymeric chains that limit the viscosity and especially the elasticity of the final uncured polymer. The B blocks are relatively easy to hydrogenate and/or more difficult to functionalize, such as by epoxidation, and, hence, they tend to remain more flexible than the A blocks after cross-linking. Preferred versions of the block polymers of the present invention have A block molecular weights between 300 and 2,000, most preferably between 600 and 1,200, because the tighter ranges tend to provide the best balance of cross-linking site availability and viscosity control. The preferred B block molecular weight is between 2,000 and 10,000, most preferably between 3,000 and 7,000, to minimize the polymer viscosity. In most cases, polymers which fall within the preferred molecular weight ranges are viscous liquids at room or slightly elevated temperatures as compared to most commercial conjugated diene-monoalkenyl aromatic hydrocarbon block copolymers or the copolymers of U.S. 3,607,982, which are relatively high molecular weight viscoelastic solids.

There are a wide variety of coupling agents that can be employed. Any polyfunctional coupling agent which contains at least two reactive sites can be employed. Examples of the types of compounds which can be used include the polyepoxides, polyisocyanates, polyimines, polyaldehydes, polyketones, polyanhydrides, polyesters, polyhalides, and the like. These compounds can contain two or more types of functional groups such as the combination of epoxy and aldehyde groups, isocyanate and halide groups, and the like. Many suitable types of these polyfunctional compounds have been described in U.S. Patent Nos. 3,595,941; 3,468,972; 3,135,716; 3,078,254; 4,096,203 and 3,594,452. When the coupling agent has two reactive sites such as dibromoethane, the polymer will have a linear ABA structure. When the coupling agent has three or more reactive sites, such as silicon tetrachloride, the polymer will have branched structure, such as $(AB)_n Y$. Coupling monomers are coupling agents where several monomer units are necessary for every chain end to be coupled. Divinylbenzene is the most commonly used coupling monomer and results in star polymers.

As stated above, it is preferred that the amount of epoxidation ranges between 0.2 and 1.0 milliequivalents of epoxide per gram of polymer. The lower range is most useful if the final adhesive, sealant or coating is to be very flexible and elastic after cure. The lower range is also best for minimizing cost and not substantially changing the hydrophobic nature or processability of the polymer. The lower range fits well with star block copolymers having compact structure and high molecular weight.

The epoxidized copolymers of this invention can be prepared by the epoxidation procedures as generally described or reviewed in the Encyclopedia of Chemical Technology 19, 3rd ed., 251-266 (1980), D. N. Schulz, S. R. Turner, and M. A. Golub, Rubber Chemistry and Technology, 5, 809 (1982), W-K. Huang, G-H. Hsuie, and W-H. Hou, Journal of Polymer Science, Part A: Polymer Chemistry, 26, 1867 (1988), and K. A. Jorgensen, Chemical Reviews, 89, 431 (1989).

For instance, epoxidation of the base polymer can be effected by reaction with organic peracids which can be preformed or formed in situ. Suitable preformed peracids include peracetic and perbenzoic acids. In situ formation may be accomplished by using hydrogen peroxide and a low molecular weight fatty acid such as formic acid. Alternatively, hydrogen peroxide in the presence of acetic acid or acetic anhydride and a cationic exchange resin will form a peracid. The cationic exchange resin can optionally be replaced by a strong acid such as sulphuric acid or p-toluenesulfonic acid. The epoxidation reaction can be conducted directly in the polymerization cement (polymer solution in which the polymer was polymerized) or, alternatively, the polymer can be redissolved in an inert solvent such as toluene, benzene, hexane, cyclohexane, methylenechloride and the like and epoxidation conducted in this new solution or can be epoxidized neat. Epoxidation temperatures on the order of 0 to 130°C and reaction times from 0.1 to 72 hours may be utilized. When employing hydrogen peroxide and acetic acid together with a catalyst such as sulphuric acid, the product can be a mixture of epoxide and hydroxy ester. The use of peroxide and formic acid in the presence of a strong acid may result in diolefin polymer blocks containing both epoxide and hydroxy ester groups. Due to these side reactions caused by the presence of an acid, it is preferred to carry out the epoxidation at the lowest possible temperature and for the shortest time consistent with the desired degree of epoxidation. Epoxidation may also be accomplished by treatment of the polymer with hydroperoxides or oxygen in the presence of transition metals such as Mo, W, Cr, V and Ag.

Epoxy functionality may also be created by direct oxidation of ethylenic unsaturation by oxygen in the presence of tetra cyano ethylene. A temperature of 150 °C and an oxygen partial pressure of 58 atmospheres is suitable for this reaction.

Partial hydrogenation is diene selective. Generally, the rate of hydrogenation is much higher for carbon-carbon double bonds in which neither of the carbons is a tertiary carbon than for carbon-carbon double bonds in which one of the carbons is a tertiary carbon. The rate of epoxidation of carbon-carbon double bonds is just the opposite. Tertiary carbons promote epoxidation with peroxyacids better than secondary carbons, which in turn are better than primary carbons. Thus, polymers of the present invention are particularly suitable for the processes of partial hydrogenation or epoxidation and are particularly suitable for the sequential or simultaneous use of both processes on the polymer. Use of partial hydrogenation alone on the present polymers preferentially leaves a greater fraction of residual diene double bonds in the blocks of the polymers which have tertiary carbons double bonded to other carbons while use of epoxidation alone leaves a greater fraction of epoxidized diene monomers in these blocks. Generally, the partial hydrogenation is more selective to diene monomer type than epoxidation. For this reason, it is better to partially hydrogenate first and epoxidize last when both processes are used on the present polymers. The effectiveness of this approach will be seen in the examples.

In a particularly preferred embodiment, the present invention includes selective placement of epoxy groups on the polymer. Due to steric hinderance, olefinic unsaturation in which one carbon atom is tertiary hydrogenates considerably slower than olefinic unsaturation in which neither carbon atom is tertiary. Conversely, when unsaturated polymers are epoxidized by reaction with organic peracids, olefinic unsaturation in which one carbon atom is tertiary and the other is secondary epoxidizes more readily than olefinic unsaturation wherein the carbon atom pair is not a tertiary-secondary pair. This phenomenon may be utilized to place the epoxy groups at predetermined locations in a polymer by copolymerizing an alkyl substituted conjugated diene along with unsubstituted conjugated dienes such that the alkyl substituted dienes are polymerized at the locations in the polymer chain where the epoxy groups are to be preferentially placed. Either the copolymer may be partially hydrogenated and then epoxidized or the unhydrogenated copolymer may be epoxidized directly. When the unhydrogenated copolymer is epoxidized, the epoxidation may be followed by hydrogenation but this is not the preferred order of treatment.

Epoxidized polymers such as those disclosed in U.S. Patent 3,699,184, can be applied in the compositions of the present invention. Said patent discloses block copolymers comprising at least one monoalkenyl arene block and at least one epoxidized conjugated diene block and hydrogenated derivatives of these block copolymers.

Other epoxidized block copolymers which may be utilized in the present invention are those disclosed in U. S. Patent No. 4,135,037. These epoxidized block copolymers comprise at least one epoxidized conjugated diene block and at least one monovinyl arene block with weight ratio of conjugated dienes to monovinyl arenes of 45:55 to 95:5. From 5 to 80 percent of the initial olefinic double bonds are epoxidized, the epoxidation being by any known method, such as the reaction with organic peracids. As applied to the present invention, the epoxidation must be within the limits as claimed.

The polymers of this invention are preferably cured by ultraviolet or electron beam radiation, but radiation curing utilizing a wide variety of electromagnetic wavelengths is feasible. Either ionizing radiation such as alpha, beta, gamma, X-rays and high energy electrons or non-ionizing radiation such as ultraviolet, visible, infrared, microwave and radio frequency may be used.

When using non-ionizing radiation it is necessary to employ a photoinitiator to initiate the cross-linking reaction. Useful photoinitiators include diaryliodonium, alkoxy-substituted diaryliodonium, triarylsulphonium, dialkylphenacylsulphonium, and dialkyl-4-hydrophenylsulphonium salts. The anions in these salts generally possess low nucleophilic character and include $SbF_6^-$, $BF_4^-$, $PF_6^-$ and $AsF_6^-$. Specific examples include (4-octyloxyphenyl)-phenyl-iodonium hexafluoroantimonate, UVI-6990 (from Union Carbide), and FX-512 (3M Company). Bis(dodecylphenyl)iodonium hexafluoroantimonate, UVI-6974 (Union Carbide), is particularly effective. The onium salts can be used alone or in conjunction with a photosensitizer to respond to long wave length UV and visible light. Examples of photosensitizers include thioxanthone, anthracene, perylene, phenothiazione, 1,2-benzathracene coronene, pyrene and tetracene. The photoinitiator and photosensitizer are chosen to be compatible with the polymer being cross-linked and the light source available.

These and other light sources, photoinitiators, and photosensitizers for cationic and combinations of free radical curing and cationic curing are described in S. P. Pappas, UV Curing: Science and Technology, Chapters 1-3, Technology Marketing Corp. (1978), C. G. Roffey, Photopolymerization of Surface Coatings, Wiley-Interscience, Chapters 2 and 3 (1982), J. V. Crivello, "Cationic Polymerization. Iodonium and Sulfonium Salt Photoinitiators," Advances in Polymer Science, 62, 1-48 (1984), W. R. Watt, "UV Curing Of Epoxides By Cationic Polymerization, Radiation Curing," Nov., 7-25 (1986), and J. V. Crivello, "Alkoxy-Substituted Diaryliodonium Salt Cationic Photoinitiators," in RadTech '90-North America Proceedings, Vol. 1, 424-431 (1990).

The amount of radiation necessary for high gel formation varies with the amount of epoxy functionality, the extent to which the epoxy functionality is concentrated in specified regions, with the polymeric mass, and the type and level of photoinitiator. When curing with ionizing radiation, such as EB (Electron Beam), a photoinitiator may be used but is not necessary. When EB radiation is utilized, radiation doses of about 0.1 Mrads to about 10 Mrads are acceptable, from about 0.1 Mrads to about 5 Mrads are preferred, and from about 0.1 to 2 Mrads are most preferred because of equipment cost and possible damage to substrate material.

The presence of water in the polymeric composition during the radiation cross-linking is very undesirable due to the tendency of water to terminate the cross-linking. The radiation curing is therefore generally more effective if the polymeric composition is at a temperature near or above the boiling point of water at the time of the radiation curing.

Radiation induced cationic curing may also be done in combination with free radical curing. Free radical curing can be further enhanced by the addition of additional free radical photoinitiators and photosensitizers for them.

Reactive (radiation curable) diluents that can be added to the polymer include alcohols, vinyl ethers, epoxides, acrylate and methacrylate monomers, oligomers and polymers. They may also be blended with other diene-based polymers. Examples of epoxides include bis(2,3-epoxy cyclopentyl)ether (Union Carbide EP-205), vinyl cyclohexene dioxide, limonene dioxide, epoxidized soya and linseed oils and fatty acids.

The polymers may also be cured without the use of radiation by addition of a cationic initiator. Suitable initiators include the halides of tin, aluminium, zinc, boron, silicon, iron, titanium, magnesium and antimony, and the fluoroborates of many of these metals. $BF_3$ complexes such as $BF_3$-ether and $BF_3$-amine are included. Also useful are strong Bronsted acids such as trifluoromethanesulfonic (triflic acid) and the salts of triflic acid such as FC-520 (3M Company). The cationic initiator is chosen to be compatible with the polymer being cross-linked, the method of application and cure temperature. The epoxy-containing polymers may also be cross-linked by the addition of multifunctional carboxylic acids, acid anhydrides, and alcohols, and in general by the curing methods described in U.S. 3,970,608. Radiation cross-linking is preferred because reactive ingredients do not come in contact with warm adhesives.

The cross-linked materials of the present invention are useful in adhesives (including pressure sensitive adhesives, contact adhesives, laminating adhesives and assembly adhesives), sealants, coatings, films (such as those requiring heat and solvent resistance), etc. In addition to the functionalized polymer and any curing aids or agents, products formulated to meet performance requirements for particular applications may include various combinations of other ingredients, such as tackifying resins, plasticizers, fillers, solvent and stabilizers.

In many applications, particularly in adhesives and sealants, it may be necessary to add an adhesion promoting or tackifying resin that is compatible with the rubbery midblock of the polymer. A common tackifying resin is a diene-olefin copolymer of piperylene and 2-methyl-2-butene having a softening point of about 95°C. This resin is available commercially under the tradename Wingtack 95 (Wingtack is a Trade Mark) and is prepared by the cationic polymerization of 60% piperylene, 10% isoprene, 5% cyclopentadiene, 15% 2-methyl-2-butene and about 10% dimer, as taught in U.S. Patent No. 3,577,398. Other tackifying resins may be employed wherein the resinous copolymer comprises 20-80 weight percent of piperylene and 80-20 weight percent of 2-methyl-2-butene. The resins normally have softening points (ring and ball) between about 80°C and about 115°C.

Other adhesion promoting resins which are also useful in the compositions of this invention include hydrogenated rosins, esters of rosins, polyterpenes, terpenephenol resins and polymerized mixed olefins, lower softening point resins and liquid resins. Examples of low softening point or liquid resins include Adtac LV, Piccolastic A5, Piccovar AP10, and Piccolyte S25 resins from Hercules (Adtac, Piccolastic, Piccovar and Piccolyte are Trade Marks). To obtain good thermo-oxidative and colour stability, it is preferred that the tackifying resin be a saturated resin, e.g., a hydrogenated dicyclopentadiene resin such as Escorez 5000 series resin made by Exxon (Escorez is a Trade Mark) or a hydrogenated polystyrene or polyalphamethylstyrene resin such as Regalrez resin made by Hercules (Regalrex is a Trade Mark). The amount of adhesion promoting resin employed varies from 10 to 400 parts by weight per hundred parts rubber (phr), preferably between 20 to 350 phr. The selection of the particular tackifying resin is, in large part, dependent upon the specific polymer employed in the respective adhesive composition.

Optionally, an arene-block-compatible resin may be employed. Compatibility is judged by the method disclosed in U.S. Patent No. 3,917,607. Normally, the resin should have a softening point above 100°C, as determined by ASTM method E 28, using a ring and ball apparatus. Mixtures of arene block-compatible resins having high and low softening points may also be used. Useful resins include coumaroneindene resins, polystyrene resins, vinyl toluene-alphamethylstyrene copolymers, and polyindene resins. Much preferred is a coumarone-indene resin. The amount of arene-block-compatible resin varies from 0 to 200 phr.

The adhesive composition of the instant invention may also contain plasticizers, such as rubber extending plasticizers, or compounding oils. Rubber compounding oils are well-known in the art and include both high saturates content oils and high aromatics content oils. Preferred plasticizers are highly saturated oils, e.g. Tufflo 6056 and 6204 oil made by Lyondell and process oils, e.g. Shellflex 371 oil made by Shell (Tufflo and Shellflex are Trade Marks). Higher aromatic content oils include Tufflo 11 and Shellflex 212. The amounts of rubber compounding oil employed in the invention composition can vary from 0 to 500 phr, preferably between 0 to 100 phr, and most preferably between 0 and 60 phr.

Various types of fillers and pigments can be included in the coating formulation. This is particularly true for exterior coatings in which fillers are added not only to create the desired appeal but also to improve the performance of the coating such as its weatherability. A wide variety of fillers can be used. Suitable fillers include calcium carbonate, clays, talcs, zinc oxide, titanium dioxide and the like. The amount of filler usually is in the range of from 0 to 70 weight-% based on the solvent free portion of the coating, depending on the type of filler used and the application for which the coating is intended. A particularly preferred filler is titanium dioxide.

If the coating will be applied from solvent solution, the organic portion of the coating will be dissolved in a solvent or blend of solvents. Aromatic hydrocarbon solvents such as toluene, xylene, or Shell Cyclo Sol 53 are suitable. If desired, it is usually possible to obtain lower viscosity by using a solvent blend consisting of an aromatic hydrocarbon solvent with a polar solvent. Suitable polar solvents include esters such as isopropyl acetate, ketones such as methyl isobutyl ketone, and alcohols such as isopropyl alcohol. The amount of polar solvent used depends on the particular polar solvent chosen and on the level of functionality on the functionalized hydrogenated block copolymer. Usually, the amount of polar solvent used is between 0 and 50 weight-% in the solvent blend.

Antioxidants and UV inhibitors can be added to the formulations to protect the products against degradation by oxidation or by exposure to sunlight during preparation and use of the compositions. Combinations of stabilizers are often more effective, due to the different mechanisms of degradation to which various polymers are subject.

The primary component of the antioxidant portion of the stabilizer package will be a hindered phenol type antioxidant. Examples of commercially available antioxidants of this type are Ethanox 330 (from Ethyl Corporation), Cyanox 2246 (from American Cyanamid) and Irganox 1010 (from Ciba Geigy) (Ethanox, Cyanox and Irganox are Trade Marks). A wide variety of secondary antioxidants and synergists can also be included in the formulation. Examples include zinc dialkyl dithiocarbamates such as Butyl Zimate (from Vanderbilt), phosphite esters such as Westin 618 (from General Electric), and sulphur bearing compounds such as dilaurylthiodipropionate, Cyanox LTDP (from American Cyanamid) (Butyl Zimate and Westing are Trade Marks). Antioxidants are usually used in the formulation at concentrations from 0.05 weight-% to 5 weight-%

The UV inhibitor portion of the stabilizer package will usually be composed of a combination of a UV light absorbing type compound and a hindered amine light stabilizer. Typical absorbing type UV inhibitors include the benzophenone type such as Cyasorb UV 531 (from American Cyanamid) and the benzotriazole type such as Tinuvin P and Tinuvin 328 (both from Ciba Geigy) (Cyasorb and Tinuvin are Trade Marks). Typical hindered amine light stabilizers include Tinuvin 770 (from Ciba Geigy) and Sanduvor 3056 (from American Cyanamid) (Sanduvor is a Trade Mark). UV inhibitors which contain a metal, such as the nickel containing UV inhibitor, Cyasorb UV 1084 (from American Cyanamid) can also be used. These UV inhibitors will generally be included in the formulation at concentrations from 0.05 weight-% to 10 weight-%.

Protective pigments and fillers can also improve the resistance to degradation by exposure to sunlight. Examples include carbon black, zinc oxide and titanium dioxide.

Compositions of the present invention are typically prepared by blending the components at an elevated temperature, preferably between 50°C and 200°C, until a homogeneous blend is obtained, usually less than three (3) hours. Various methods of blending are known to the art and any method that produces a homogeneous blend is satisfactory. The resultant compositions may then preferably be used in a wide variety of applications. Alternatively, the ingredients may be blended into a solvent.

Adhesive compositions of the present invention may be utilized as many different kinds of adhesives' for example, laminating adhesives, pressure sensitive adhesives, tie layers, hot melt adhesives, solvent borne adhesives and waterborne adhesives in which the water has been removed before curing. The adhesive can consist of simply the epoxidized polymer or, more commonly, a formulated composition containing a significant portion of the epoxidized polymer along with other known adhesive composition components. A preferred method of application will be hot melt application at a temperature around or above 100°C because hot melt application above 100°C minimizes the presence of water and other low molecular weight inhibitors of cationic polymerization. The adhesive can be heated before and after cure to further promote cure or post cure. Radiation cure of hot adhesive is believed to promote faster cure than radiation cure at room temperature.

Preferred uses of the present formulation are the preparation of pressure-sensitive adhesive tapes and the manufacture of labels. The pressure-sensitive adhesive tape comprises a flexible backing sheet and a layer of the adhesive composition of the instant invention coated on one major surface of the backing sheet. The backing sheet may be a plastic film, paper or any other suitable material and the tape may include various other layers or coatings, such as primers, release coatings and the like, which are used in the manufacture of pressure-sensitive adhesive tapes. Alternatively, when the amount of tackifying resin is zero, the compositions of the present invention may be used for adhesives that do not tear paper and moulded goods and the like.

Examples

The following block polymers were prepared for use in these examples.

Polymer 1. A linear triblock polymer having two polystyrene endblocks and a midblock of random polyisoprene/polybutadiene was prepared in a mixture of cyclohexane and diethyl ether by anionic polymerization. For every one mole of active initiator (sec-butyl lithium), 71 moles of styrene, 78 moles of 1,3-isoprene/575 moles of 1,3-butadiene and 72 moles of styrene were added and polymerized successively, and the polymer was terminated with methanol. The molar ratios correspond to the given % by weight composition. The peak molecular weight of the polymer, measured by GPC, was 52,000. The polymer contained 12.7 milliequivalents of aliphatic double bonds per gram of polymer, of which 1.5 milliequivalents per gram were from polymerized isoprene units.

|  | weight % |
|---|---|
| polystyrene | 29.0 |
| polyisoprene | 10.4 |
| polybutadiene | 60.6 |

The polymer was then partially hydrogenated using a nickel-aluminium catalyst under conditions that will not hydrogenate aromatic double bonds but will preferentially hydrogenate residual aliphatic double bonds from polymerized butadiene units and the catalyst and the residual lithium were washed out. The hydrogenation catalyst was made by the reaction of nickel octoate and triethylaluminium and was used at 15 ppm nickel, on a solution basis, at a pressure of 47.6 atm (700 psi ;48.3 bar). The polymer was recovered by hot water coagulation and dried. NMR analysis provided the following estimate of the residual aliphatic double bonds. From the table it is apparent that the butadiene units were preferentially hydrogenated.

| NMR Results | Weight % | Meq ADB/g polymer |
|---|---|---|
| styrene | 28.7 | 0.00 |
| 1,4-isoprene (intact) | 3.3 | 0.48 |
| 3,4-isoprene (intact) | 3.2 | 0.47 |
| 1,4-butadiene (intact) | 1.4 | 0.26 |
| 1,2-butadiene (intact) | 0.0 | 0.00 |
| saturates | 63.4 | 0.00 |
| Total | 100.0 | 1.21 |

Polymer 2. A portion of the above partially hydrogenated polymer was dissolved in cyclohexane and epoxidized at 45°C using a solution of peracetic acid from FMC Corp according to the recipe below, using a stirred reactor flask, a 30 minute peracetic acid addition and 6 hour hold. The sodium carbonate was added in two steps, first half was added prior to the peracetic acid addition and the other half was added midway in the peracetic acid addition. The polymer was water washed repeatedly to remove all traces of acid, a small amount of antioxidant BHT (butylated hydroxytoluene) was added, the polymer was coagulated with isopropanol, and dried at 40°C in a vacuum oven. The peak molecular weight, determined by GPC, was 53,000.

| polymer, g | 311.60 |
|---|---|
| cyclohexane, g | 3116.00 |
| sodium carbonate, g | 5.32 |
| peracetic acid solution, g | 232.71 |

The amount of epoxy was measured by the direct titration with perchloric acid (0.1N) and quarternary ammonium halogenide (tetraethylammonium bromide) where the sample was dissolved in methylene chloride. The epoxy titration is described in Epoxy Resins Chemistry and Technology, edited by Clayton A. May, and published in 1988 (p. 1065). 0.82 milliequivalents of epoxide per gram of polymer were found. The residual aliphatic double bonds were determined by NMR.

| NMR Results | Weight % | Meq ADB/g polymer |
|---|---|---|
| styrene | 28.7 | 0.00 |
| 1,4-isoprene (intact) | 0.3 | 0.04 |
| 3,4-isoprene (intact) | 0.8 | 0.12 |
| 1,4-butadiene (incact) | 0.1 | 0.02 |
| 1,2-butadiene (intact) | 0,1 | 0.02 |
| saturates | 70.0 | 0.00 |
| Total | 100.0 | 0.20 |

Polymer 3 was a triblock polymer having polystyrene end blocks and a polybutadiene midblock, where only the midblock was fully hydrogenated. The polystyrene content was 29% by weight. The peak molecular weight determined by GPC was 53,000 and the residual butadiene double bond content was 0.06 Meq/g of polymer as determined by NMR.

Polymer 4 was an epoxidized asymmetric armed star polymer which had certain characteristics of a polymer mixture. Specifically, analysis revealed that it was a mixture of a pure asymmetric star component which had been partially hydrogenated and epoxidized, and a pure linear (unattached arm) component which was substantially fully hydrogenated and consequently accepted little or no epoxidation. The pure star component of Polymer 4 was 77% by weight, and the pure unattached linear arm component was 23% by weight, as determined using GPC analysis. Overall, Polymer 4 contained 0.40 Meq of epoxy per gram of polymer, as determined by epoxy titration, and no residual aliphatic double bonds, as determined by NMR. The weight average molecular weight of Polymer 4 was between 1.3 and 1.8 million. The polymer was prepared by anionic synthesis of two types of living linear polymers, i.e., a living polyisoprene arm having a molecular weight of 38,000 and a living polystyrene-polyisoprene diblock arm having a molecular weight of 52,000, where the molecular weight of the polystyrene block was 11,000. The total amount of polystyrene in the polymer was 5.7% by weight. The asymmetric polymer was formed by coupling with a commercial mixture of divinylbenzene (DVB-55 from Dow). The polymer was partially hydrogenated to give a polymer containing only 0.59 Meq/g of residual aliphatic double bonds from 1,4-isoprene units and 0.03 Meq/g from 3,4-isoprene units, as determined by NMR. GPC analysis after partial hydrogenation showed that the unattached linear arm component consisted of 12% hydrogenated polyisoprene arms and 11% by weight polystyrene-(hydrogenated) polyisoprene arms. The polymer was epoxidized with peracetic acid, washed and recovered by coagulation and drying.

Polymer 5 was a fully hydrogenated styrene-butadiene-styrene triblock copolymer having a molecular weight of 89,000 and a 13 weight-% polystyrene content. Hydrogenation had reduced the ethylenic unsaturation to less than 0.2 Meq/g of ethylenic unsaturation.

Example 1

A sample of Polymer 2 and a sample of Polymer 3 were each dissolved in toluene and cast onto sheets of $25.10^{-6}$ m (1 mil) Mylar to result in a $76.10^{-6}$ m (3 mil) layer of dry polymer. The samples were predried in an oven for 5 minutes at 149°C (300°F) to remove any moisture and then treated with electron beam radiation at 3, 5, and 7 Mrads. The polymer films were then measured for gel content by soaking in toluene for 24 hours and measuring the undissolved polymer to determine the extent of cure and their inherent solvent resistance. This test is described in the article "Experimental Thermoplastic Rubbers for Enhanced Radiation Cross-linking of Hot Melt PSA's" published in the May 1985 Hot Melt Symposium of TAPPI. Table 1 lists the gel contents (measure of solvent resistance) of the compositions after each level of irradiation. Neither polymer has solvent resistance before exposure to the electron beam radiation.

Table 1

| | % gel content | | |
|---|---|---|---|
| Composition | 3 Mrad | 5 Mrad | 7 Mrad |
| Polymer 2 | 30 | 67 | 100 |
| Polymer 3 | 0 | 0 | 0 |

This example demonstrates the high gel content which can be achieved by irradating the lightly epoxidized hydrogenated block copolymer according to the present invention. Polymer 2 could be cross-linked to a useful level of gel content with only 5 Mrad of radiation. The lack of gel content of the irradiated Polymer 3, which was not epoxidized, demonstrated the inability of hydrogenated polymers to cross-link when exposed to radiation if the polymers are not epoxidized.

Example 2

Polymer 2 and Polymer 3 were incorporated into pressure sensitive adhesive compositions 2A and 2B having the compositions listed in Table 2.

Table 2

| Composition | 2A | 2B |
|---|---|---|
| Polymer 2 | 45.00 | 0 |
| Polymer 3 | 0 | 45.00 |
| Escorez 5380[1] | 43.41 | 43.41 |
| Shellflex 371[2] | 11.59 | 11.59 |
| Irganox 565[3] | 0.25 | 0.25 |
| Polygard HR[4] | 0.50 | 0.50 |

[1] hydrogenated tackifying agent from Exxon
[2] a process oil from Shell
[3] an antioxidant from Ciba Geigy
[4] an antioxidant from Uniroyal

Adhesive compositions 2A and 2B were dissolved in toluene and cast onto 1 mm Mylar sheets to give 1.6 mm of dry adhesive. The adhesive films were irradiated with 7 Mrad of electron beam radiation and then the gel content and resistance to shear (holding power) at 95°C using a 6.5 cm$^2$ (1 square inch) overlap and a 1 kilogram weight were determined. The gel contents and holding powers are listed in Table 3.

Table 3

| | % gel | | 95° Holding Power Adhesive | |
|---|---|---|---|---|
| | 0 Mrad | 7 Mrad | 0 Mrad | 7 Mrad |
| 2A | 0 | 67% | 13 min | 571 min |
| 2B | 0 | 0 | 22 min | 30 min |

The adhesive composition incorporating the epoxidized block copolymer showed solvent resistance and good high temperature holding power after being irradiated at 7 Mrads. The composition containing the hydrogenated and nonepoxidized polymer did not form gel after being irradiated and gave unacceptable high temperature shear resistance before and after irradiation.

Example 3

Polymer 4 was dissolved in toluene and cast onto 1 mm Mylar sheet to result in about 3 mm of dry polymer.

Test sheets 3A through 3F were cast from this polymer coated Mylar sheet. The test sheets were then baked for 5 minutes at 149°C (300°F) to remove any casual water and were electron beam cured at varying dosages of radiation. The % gel contents were measured and are included in Table 4.

Table 4

| Test Sheet | Radiation Dose, Mrad | % Gel |
|---|---|---|
| 3A | 0 | 0 |
| 3B | 0.5 | 71 |
| 3C | 1 | 73 |
| 3D | 2 | 78 |
| 3E | 3 | 79 |
| 3F | 5 | 80 |

From Table 4, it can be seen that a high gel content was achieved with as little as 0.5 Mrads of electron beam radiation, where 92% of the epoxidized star molecules in Polymer 4 were incorporated into the cross-linked network.

Example 4

Polymer 4 was formulated with a series of common ingredients used in making adhesives with styrene-diolefin block copolymers to make 3 samples of adhesive compositions. Polymer 5 was formulated with the same ingredients for comparative purposes. Table 5 lists the compositions of each series of compositions. Formulations 4D and 4H are simply the neat polymer dissolved in a solvent. They were used only to compare gel formation. Gel content and ability to hold in shear at 95°C were then determined and the results are below in Table 6.

Table 5

|  | 4A | 4B | 4C | 4D | 4E | 4F | 4G | 4H |
|---|---|---|---|---|---|---|---|---|
| Polymer 4 | 50 | 50 | 50 | 100 | 0 | 0 | 0 | 0 |
| Polymer 5 | 0 | 0 | 0 | 0 | 50 | 50 | 50 | 100 |
| Escorez 5380 | 50 | 0 | 0 | 0 | 50 | 0 | 0 | 0 |
| Wingtack 95[1] | 0 | 50 | 0 | 0 | 0 | 50 | 0 | 0 |
| Shellflex 371 | 0 | 0 | 50 | 0 | 0 | 0 | 50 | 0 |

[1]a tackifying resin from Goodyear

Table 6

| | % Gel | | | | | | 95°C Holding Power, Min. | | | | | |
|---|---|---|---|---|---|---|---|---|---|---|---|---|
| Dose, Mrads | 0 | .5 | 1 | 2 | 3 | 5 | 0 | .5 | 1 | 2 | 3 | 5 |
| 4A | 0 | 66 | 71 | 79 | 81 | 81 | 68 | >1000 | >1000 | >1000 | >1000 | >1000 |
| 4B | 0 | 0 | 64 | 67 | 74 | 68 | 113 | 360 | >1000 | >1000 | >1000 | >1000 |
| 4C | 0 | 0 | 56 | 78 | 73 | 55 | 0 | 20 | 116 | 541 | 199 | 146 |
| 4D | 0 | 59 | 72 | 75 | 73 | 73 | - | - | - | - | - | - |
| Dose, Mrads | 0 | 9.5 | 14.3 | | 19 | | 0 | 9.5 | 14.3 | 19 | | |
| 4E | 0 | 0 | 0 | | 0 | | 25 | 18 | 41 | 20 | | |
| 4F | 0 | 0 | 0 | | 0 | | 54 | 42 | 30 | 40 | | |
| 4G | 0 | 0 | 8 | | 0 | | 0 | 0 | - | 0 | | |
| 4H | 0 | 26 | 51 | | 65 | | - | - | - | - | | |

Sample 4C failed in 95°C holding power by adhesive failure to the Mylar substrate because of the Shellflex 371 is a plasticizing oil and is used as an additive at low levels in adhesives because of its detrimental effect on holding power. This sample demonstrates the effect of the plasticizing oil on the curing of the composition, but 4C is not an acceptable adhesive composition due to the high level of plasticizer present.

This example demonstrates the superiority of a hydrogenated epoxidized block copolymer over a conventional hydrogenated block copolymer in simple adhesive formulations that are to be improved by use of electron beam radiation. The data also shows that the presence of tackifying resin and plasticizer affect the cure requirements to a small extent.

When a conventional hydrogenated block copolymer, Polymer 5, is utilized, the tackifying resins and plasticizing oil severely interfere with the cure. Without the plasticizer or tackifying resin, the composition formed some gel upon irradiation, although the amount of gel was insufficient to result in an acceptable adhesive composition.

It is also evident from Table 6 that electron beam radiation does not increase the high temperature holding power of compositions when the electron beam radiation does not induce gel formation. This conclusion is reached by comparing the holding powers of compositions 4E, 4F and 4G with those of the irradiated compositions. The irradiation did not significantly increase the holding power of the compositions. Conversely, when electron beam radiation induces covalent curing, the high temperature holding power is dramatically increased as can be determined by comparing the holding powers of irradiated compositions 4A and 4B with the holding power of the same compositions which were not exposed to irradiation.

Polymer 6 was a star polymer having polyisoprene and polybutadiene blocks was prepared by anionic polymerization in cyclohexane. For every one mole of active initiator (sec-butyl lithium), 75 moles of 1,3-isoprene, 519 moles of 1,3-butadiene, 10 moles of 1,3-isoprene and 6 moles of divinylbenzene mixture were polymerized successively. A small amount of 1,2-diethoxyethane was added to the polymer solution just before the addition of the butadiene monomer for the purpose of polymerizing the butadiene to a high 1,2 configuration. The polymer was terminated with methanol. The molar ratios correspond to the given % by weight composition for the polymer. Based on composition, the polymer contained about 17.4 Meq of aliphatic double bonds per gram of polymer. The peak molecular weight of the polyisoprene-polybutadiene-polyisoprene arms prior to coupling with the DVB, as measured by GPC, was 33,000. NMR analysis on the arms prior to DVB coupling indicated that the first polyisoprene blocks contained 10% of their isoprene mers in the 3,4 configuration and 90% in the 1,4 configuration, the polybutadiene blocks contained 81% of their butadiene mers in the 1,2 configuration and 19% in the 1,4 configuration and the last isoprene blocks had 36% of their mers in the 3,4 configuration and 64% in the 1,4 configuration.

|  | weight % |
|---|---|
| polyisoprene | 14.7 |
| polybutadiene | 81.0 |
| polyisoprene | 2.0 |
| DVB mixture | 2.3 |

Polymer 7. A portion of Polymer 6 was partially hydrogenated using a nickel-aluminium catalyst under conditions that do not hydrogenate aromatic double bonds and will preferentially hydrogenate aliphatic double bonds of the butadiene mers, and the catalyst and the residual lithium were washed out. The hydrogenation catalyst was made by the reaction of nickel octoate and triethylaluminium, and was used at 13 ppm nickel, on a solution basis, at a pressure of 34 atm (500 psi ; 34.5 bar).

NMR analysis provided the following approximate composition of the residual aliphatic double bonds.

| NMR Results | Meq/g |
|---|---|
| 1,4 isoprene (intact ADB) | 0.63 |
| 3,4 isoprene (intact ADB) | 0.08 |
| 1,4 butadiene (intact ADB) | 0.62 |
| 1,2 butadiene (intact ADB) | 0.06 |
| Total | 1.39 |

Polymer 8. A portion of the above partially hydrogenated polymer solution was epoxidized at 45°C using a solution of peracetic acid from FMC Corp. according to the recipe below, using a stirred reactor flask, a 60 minute peracetic acid addition time and a 6 hour hold. The sodium carbonate was added in two steps. After the 6 hour hold, sufficient sodium carbonate was added to neutralize all the acetic and any residual peracetic acid in the reaction flask, the polymer solution was thoroughly washed with water and the solvent was separated from the polymer by drying.

| Epoxidation | |
|---|---|
| polymer, g | 275 |

(continued)

| Epoxidation | |
|---|---|
| solvent (mostly cyclohexane), g | 1762 |
| sodium carbonate, g | 4,07 |
| peracetic acid solution, g | 188 |

NMR analysis on the polymer gave the following approximate breakdown of residual aliphatic double bonds left and the approximate amount of epoxide formed.

| NMR Results | Meq/g |
|---|---|
| 1,4-isoprene (intact ADB) | 0.03 |
| 3,4-isoprene (intact ADB) | 0.01 |
| 1,4-butadiene (intact ADB) | 0.02 |
| 1,2-butadiene (intact ADB) | 0.04 |
| ADB Total | 0.10 |
| | |
| epoxy group | 1.23 |
| ADB + epoxide Total | 1.33 |

The titrated value found for the amount of epoxide in polymer 8 was 1.01 Meq/g. The molecular weight of Polymer 8 was 600,000.

Example 5

Polymer 8 was used to make formulations 5A, 5B, 5C, and 5D. Formulation 5A is just neat polymer with a small amount of antioxidant added while formulation 5B included 25% of the tackifying resin Escorez 5380 (Exxon). These formulations were intended for EB curing. Formulations 5C and 5D are similar to 5A and 5B respectively, except that 1% UVI-6974 photoinitiator (Union Carbide) was added to facilitate UV cure.

| Formulation | 5A | 5B | 5C | 5D |
|---|---|---|---|---|
| Polymer 20023-5A | 99.7 | 74.8 | 98.7 | 74.0 |
| Escorez 5380 | 0.0 | 24.9 | 0.0 | 24.7 |
| UVT-6974 | 0.0 | 0.0 | 1.0 | 1.0 |
| Irganox 1010 | 0.3 | 0.3 | 0.3 | 0.3 |

Formulations 5A and 5B were dissolved in toluene and cast onto sheets of 1 mm Mylar to give 3 mm layers of dry formulation after solvent evaporation. Formulations 5C and 5D were dissolved in a 75/25 weight % mixture of toluene/n-butanol and similarly cast. Immediately before irradiating the film samples, the samples were preheated in an oven for 2 minutes at 149°C to remove any moisture and simulate having just been hot melt coated. EB irradiation was done on an ESI CB-150 processor using 165 Kev electrons. UV irradiation was done on a Linde PS-2000 Laboratory Photocure unit having a single medium pressure Hg bulb delivering UV radiation from 188 nm to 365 nm, aluminium reflectors and a variable speed carrier belt. UV dose was controlled by varying the conveyor speed, which has a 0.30 m/s (60 fpm) maximum and by inserting a filter. The filter prevents UV irradiation below about 300 nm from reaching the test product. This grossly reduces the incidence of UV energy that overlaps the absorbance spectrum of the UVI-6974 photoinitiator. For both EB and UV curing, a nitrogen blanket was used to suppress ozone formation and its consequent discharge into the working environment. Curing involves a cationic mechanism which is known not to be inhibited by oxygen. The formulations were tested for polymer gel content (solvent resistance) and other properties of a high performance PSA adhesive. The results are given in Table 7.

Table 7

Electron Beam Cure

% Polymer Gel Content

| Formulation does, Mrads | 5A | 5B |
|---|---|---|
| 0 | 0 | 0 |
| 1 | 85 | 81 |
| 2 | 88 | 86 |

UV Cure - no filter

| | Polymer Gel Content (%) | | 95 °C Holding* Power to Mylar (mins.) | | Rolling Ball Tack (cm) | | Polyken Probe Tack (Kg) | | 180° Peel from steel (kg/cm) | |
|---|---|---|---|---|---|---|---|---|---|---|
| Formulation: line speed, cm/min | 5C | 5D | 5C | 5D | 5C | 5D | 5C | 5D | 5C | 5D |
| no dose | 0 cohesive | 0 failure | 0 | 0 | cohesive | failure | | | 1.7 cohesive failure | 2.7 |
| 30.5 | 95 | 100 | >1000 | >1000 | 3 | 3 | .8 | .9 | 0.21 | 0.45 |
| 20.3 | 97 | 100 | >1000 | >1000 | 3 | 4 | .6 | .8 | 0.21 | 0.41 |
| 10.2 | 99 | 100 | >1000 | >1000 | 2 | 3 | .6 | 1.2 | 0.18 | 0.38 |

* 6.5 cm$^2$ (1 square inch) overlap with a 1 Kg mass.

c = slight cohesive failure.

Table 7 (cont'd)

UV Cure With Use of a Filter

| | Polymer | | 95 °C | | Rolling | | Polyken | | 180 °C Peel from steel | |
|---|---|---|---|---|---|---|---|---|---|---|
| | Gel Content (%) | | Holding* Power to Mylar (mins.) | | Ball Tack (cm) | | Probe Tack (kg) | | (kg/cm) | |
| Formulation: line speed, cm/min | 5C | 5D | 5C | 5D | 5C | 5D | 5C | 5D | 5C | 5D |
| 30.5 | 86 | 95 | >1000 | 500 | 1 | 4 | .8 | 1.2 | 0.46c | 0.71c |
| 20.3 | 92 | 94 | >1000 | >1000 | 2 | 3 | .6 | .9 | 0.23c | 0.48 |
| 10.2 | 98 | 98 | >1000 | >1000 | 3 | 2 | .6 | 1.0 | 0.16 | 0.38 |

\* 6.5 cm$^2$ (1 square inch) overlap with a 1 Kg mass.

c = slight cohesive failure.

The results in Table 7 show that Polymer 8 can be cured to high gel contents at low doses of EB or UV irradiation. In formulations 5A and 5B, the polymer was cured to over 80% gel with just 1 Mrad of EB irradiation. In formulations 5C and 5D, the polymer was fully cured with a single pass under the unfiltered UV bulb at 10.2, 20.3 and 30.5 cm/min (20, 40 and 60 feet per minute), which was the maximum speed available on the UV processing unit. Even when using the filter to prevent UV light with a wavelength less than about 300 nm from reaching the test specimen, formulation 5C was fully cured at 20 fpm and formulation 5D was fully cured at 20.3 cm/min (40 fpm). PSA testing of formulations 5C and 5D show that without curing the formulations lack sufficient cohesive strength to be useful as pressure sensitive adhesives. However, PSA testing of the UV cured samples shows that formulation 5C (the polymer) or, better yet, formulation 5D (the tackifying resin-containing polymer) are excellent adhesives having sufficient cohesive strength to allow good tack properties (rolling ball tack and Polyken probe tack), clean peeling (180° peel from steel) and provide high temperature shear resistance (95°C holding power to Mylar.

Polymer 9. A (polyisoprene-polybutadiene)n divinylbenzene star polymer was prepared in cyclohexane containing a small amount of diethyl ether cosolvent by the well known anionic polymerization method. For about every one mole of active initiator (sec-butyl lithium), 4.5 moles of 1,3-isoprene, 65 moles of 1,3-butadiene and 3.8 moles of technical divinylbenzene were added and polymerized successively, and the polymer was terminated with methanol. The technical divinyl benzene was DVB-55 from Dow, which consists primarily of mixed isomers of divinylbenzene and ethylvinylbenzene. The molar ratios correspond to the given % by weight composition for the polymer.

| | weight % |
|---|---|
| butyl group | 1.3 |
| polyisoprene | 7.1 |
| polybutadiene | 80.4 |
| DVB-55 mixture | 11.2 |

Therefore, a (A-B)nY polymer had been produced where A was polyisoprene, B was polybutadiene, and Y was DVB. The peak diblock arm molecular weight, as determined by GPC, was 3900. Thus, the polyisoprene block had a molecular weight of 370 and consisted of one terminal butyl group and 4 to 5 isoprene mers. The polybutadiene block had a molecular weight of 3500 and consisted of 65 butadiene mers.

Thus block A contained TU sites, about 12 Meq/g, while block B had no TU sites.

Polymer 10. The above polymer solution of Polymer 9 was partially hydrogenated using a nickel-aluminium catalyst under conditions that will not hydrogenate aromatic double bonds but will preferentially hydrogenate aliphatic double bonds of butadiene mers, and the catalyst and the residual lithium were washed out. The hydrogenation catalyst was made by the reaction of nickel octoate and triethylaluminium, and was used at 15 ppm nickel, on a solution basis, at a pressure of 47.6 atm (700 psi; 48.3 bar). A portion of the polymer was dried. NMR analysis provided the following composition of residual double bonds.

| NMR Results | Weight % | Meq. ADB/g polymer |
|---|---|---|
| 1,4 isoprene (intact ADB) | 3.5 | 0.51 |
| 3,4 isoprene (intact ADB) | 1.2 | 0.18 |
| 1,4 butadiene (intact ADB) | 1.2 | 0.22 |
| 1,2 butadiene (intact ADB) | 0.1 | 0.02 |
| other (hydrogenated mers DVB) | 94.0 | |
| | 100.0 | 0.93 |

Thus, the partially hydrogenated polymer had A blocks which each consisted of one butyl group, and on average, 3 isoprene mers with their residual ADB intact and 1.5 hydrogenated isoprene mers. The B blocks, on average, each contained 1 butadiene mer with its ADB intact and 64 hydrogenated butadiene mers. The weight average molecular weight, Mw, of the partially hydrogenated polymer was as measured by static light scattering. Dry polymer was dissolved in tetrahydrofuran and filtered through a 0.5 and a 0.2 micrometer filter. The analysis wavelength was 632.8 nm, the temperature was 25.0°C and the DRI (differential refractive index) was 0.0884. The Mw determined was 85,000. Dividing this Mw, less the DVB contribution, by the diblock peak molecular weight of 3900 plus the small contribution due to hydrogenation, indicated that the star had 19 diblock arms, n = 19.

Hydrogenation of the polymer increased its viscosity, but the viscosity of the partially hydrogenated polymer both neat and dissolved in toluene was still low.

| Neat Viscosity | | | |
|---|---|---|---|
| Temperature, °C | 60 | 80 | 100 |
| Viscosity, $10^{-3}$ $Ns/m^2$ (cps) | 37,000 | 14,000 | 5,700 |
| Toluene Solution Viscosity | | | |
| Solids, wt% | 40 | 50 | 60 |
| Viscosity, $10^{-3}$ $Ns/m^2$ (cps) (25°C) | 115 | 290 | 810 |

By way of comparison, the well known commercial hydrogenated polymers shown below are all viscoelastic solids at room temperature through 100°C and have the shown typical toluene solution viscosities at 25% solids and 25°C.

| | |
|---|---|
| KRATON* G1650 | 8000 cps |
| KRATON G1652 | 1350 cps |
| KRATON G1657 | 4200 cps |

* (KRATON is a Trade Mark)

Polymer 11. The above partially hydrogenated polymer in solution was epoxidized with a solution of peracetic acid from FMC Corp. After neutralization with base and water washing, the polymer solution was poured out into a shallow pan and dried to recover the neat polymer. The polymer was found to be slightly more viscous after epoxidation than before. The polymer was analyzed by NMR to determine the number and type of residual double bonds.

| NMR results: | Weight % | Meq ADB/g polymer |
|---|---|---|
| 1,4 isoprene (intact) | 0.3 | 0.04 |
| 3,4 isoprene (intact) | 0.6 | 0.09 |
| 1,4 butadiene (intact) | 0.1 | 0.02 |

(continued)

| NMR results: | Weight % | Meq ADB/g polymer |
|---|---|---|
| 1,2 butadiene (intact) | 0.0 | 0.00 |
| other (aliphatic, DVB) | 99.0 | |
| | 100.0 | 0.15 |
| Meq/g for epoxide (from epoxide titration) | | 0.70 |

Thus, the A blocks each contained, on average, 0.6 isoprene mers with their residual ADB intact and each B block contained little or no mers with their residual ADB intact. Hence, it can be inferred that the average A blocks contained a butyl group, 2.4 epoxidized isoprene mers, and 1.4 hydrogenated isoprene mers, while the average B block contained 1.0 epoxidized butadiene mer and 64 hydrogenated butadiene mers. Overall, each polymer molecule contained 66 epoxide groups and 13 residual aliphatic double bonds. The amount of epoxy was also measured by the direct titration with perchloric acid (0.1N) and quaternary ammonium halogenide (tetraethyl ammonium bromide) where the sample was dissolved in methylene chloride. Epoxy titration is described in Epoxy Resins Chemistry and Technology, edited by Clayton A. May and published in 1988 (p. 1065). This method indicated that each polymer molecule contained 60 epoxide groups.

Example 6

Polymer 11 is a gooey, viscous liquid at room temperature that has little internal (cohesive) strength. However, it is very easy to either warm melt or solution apply the neat polymer or the compounded polymer as a thin film to a substrate. Upon cross-linking through the epoxide groups, the polymer gains considerable cohesive strength without becoming brittle or inflexible and can be used to make useful pressure sensitive adhesives having high temperature service properties and solvent resistance as shown below.

| Formulating the epoxidized polymer 11. | | | | | | |
|---|---|---|---|---|---|---|
| PSA formulation | 6A | 6B | 6C | 6D | 6E | 6F |
| Polymer | 99.2 | 74.4 | 49.6 | 99.7 | 74.8 | 49.9 |
| Regalrez 1094 | 0.0 | 24.8 | 49.6 | 0.0 | 24.9 | 49.8 |
| Irganox 1010 | 0.3 | 0.3 | 0.3 | 0.3 | 0.3 | 0.3 |
| FC-520 | 0.5 | 0.5 | 0.5 | 0.0 | 0.0 | 0.0 |
| | 100.0 | 100.0 | 100.0 | 100.0 | 100.0 | 100.0 |

Regalrez 1094 resin is a hydrogenated high softening point tackifying resin from Hercules, Irganox 1010 antioxidant is a phenolic antioxidant from Ciba-Geigy and FC-520 is a solution of a salt of triflic acid from 3M Company.

Formulations 6A-6C were dissolved in toluene and cast onto Mylar film and the solvent was allowed to evaporate. About 1.5 mm dry films of a gooey material were obtained. The films were placed in an oven and baked at 149°C for 20 minutes to convert the gooey films into useful pressure sensitive adhesives which have good cohesive strength. The polymer gel content of each of the films was measured by the test of reference which is described in the article "Experimental Thermoplastic Rubbers for Enhanced Radiation Cross-linking of Hot Melt PSA, published in May 1985, Hot Melt Symposium of TAPPI. The results below show that the polymer cross-links well.

| Formulation | Polymer gel content, % |
|---|---|
| 6A | 86 |
| 6B | 100 |
| 6C | 65 |

Formulations 6D-6F, which have no FC-520 catalyst in them, were similarly dissolved and cast onto Mylar and dried. They were given a short bake to simulate being hot melt extruded and were then treated under a nitrogen blanket with electron beam radiation using 165 keV electrons. Without EB treatment the films remain a gooey liquid having no gel content or other desirable properties. However, upon EB treatment they formed useful pressure sensitive adhesives (PSA) which have good cohesive strength. The polymer gel content results given below were obtained.

| Formulation | Polymer gel content, % | | | |
|---|---|---|---|---|
| Dose, Mrad | 0 | 3 | 5 | 7 |
| 6D | 0 | 57 | 95 | 100 |
| 6E | 0 | 53 | 69 | 78 |
| 6F | 0 | 48 | 67 | 73 |

The following results were obtained upon PSA testing of formulation 6B that was baked for 20 minutes at 149°C and formulation 6E that was EB cured with 5 Mrads. A commercial high temperature, high performance automotive grade masking tape was run as a control.

| | 6B | 6E | Commercial Tape |
|---|---|---|---|
| 95°C Holding Power to Mylar, min (2.54 cm * 2.54 cm * 500g) | >1000 | >1000 | 621 |
| 23°C Holding Power to Steel, min (2.54 cm * 2.54 cm * 500g) | >4000 | >4000 | >4000 |
| 23°C Polyken Probe Tack, grams | 760 | 520 | 340 |
| 23°C 180 Peel from Steel, kg/cm | 0.21 | 0.21 | 0.38 |

This illustrates that formulations of the present invention have properties similar to or better than the high performance commercial product.

## Claims

1.  A crosslinked epoxidized diene block copolymer which is obtainable by a process comprising the steps of:

    a) providing a block copolymer comprising diene monomer units,

    b) partially hydrogenating the base polymer to a residual content of aliphatic double bonds of 0.2 to 2 milliequivalents per gram of polymer,

    c) contacting the partially hydrogenated diene block copolymer with a peroxyacid to form an epoxidized polymer having between 0.1 and 5 milliequivalents of epoxide per gram of polymer, and

    d) chemically or by means of radiation energy crosslinking the epoxidized polymer through at least some of the epoxy functionality to form a crosslinked polymer which has sufficient gel content to provide increased resistance to temperature and/or organic solvents.

2.  The polymer of claim 1, wherein the non-crosslinked epoxidized polymer obtained in step c) contains 0.2 to 1.0 milliequivalents of epoxide per gram of polymer.

3.  The polymer of claims 1 or 2, wherein the block copolymer provided in step a) is obtainable by copolymerizing one or more olefins, including at least one conjugated diene, by themselves or with one or more alkenyl aromatic hydrocarbon monomers.

4.  The polymer of claim 3, wherein the conjugated diene is selected from the group consisiting of 1,3-butadiene and isoprene and the alkenyl aromatic hydrocarbon monomer is styrene.

5.  The polymer of any of claims 1 to 4, wherein the diene block copolymer provided in step (a) has the general formula

$$(A\text{-}B\text{-}A_p)_n\text{-}Y_r\text{-}(A_q\text{-}B)_m \qquad (I)$$

    -    wherein Y is the residue of a coupling agent or a coupling monomer,
    -    A and B are polymer blocks which may be homopolymer blocks of conjugated diene monomers, copolymer blocks of conjugated diene monomers or copolymer blocks of conjugated diene monomers and monoalkenyl

18

aromatic hydrocarbon monomers, wherein the A blocks have a greater number of tertiary unsaturation (TU) sites per unit of block mass than do the B blocks, where a TU site is an aliphatic double bond between a tertiary carbon atom and either a primary or a secondary carbon atom,
- the A blocks have a molecular weight from 100 to 3000 and the B blocks have a molecular weight from 1000 to 15,000, and
- p and q are 0 or 1 and n > 0, r is 0 or 1, m $\geq$ 0 and n + m ranges from 1 to 100.

6. The polymer of claim 5, wherein the molecular weight of the A blocks ranges from 300 to 2,000 and the molecular weight of the B blocks ranges from 2,000 to 10,000.

7. An epoxidized diene block copolymer which is obtainable by a process comprising the steps of:

a) providing a block copolymer having the general formula

$$(A\text{-}B\text{-}A_p)_n\text{-}Y_r\text{-}(A_q\text{-}B)_m \qquad\qquad (I)$$

- wherein Y is the residue of a coupling agent or a coupling monomer,
- A and B are polymer blocks which may be homopolymer blocks of conjugated diene monomers, copolymer blocks of conjugated diene monomers or copolymer blocks of conjugated diene monomers and monoalkenyl aromatic hydrocarbon monomers, wherein the A blocks have a greater number of tertiary unsaturation (TU) sites per unit of block mass than do the B blocks, where a TU site is an aliphatic double bond between a tertiary carbon atom and either a primary or a secondary carbon atom,
- the A blocks have a molecular weight from 100 to 3000 and the B blocks have a molecular weight from 1000 to 15,000, and
- p and q are 0 or 1 and n > 0, r is 0 or 1, m $\geq$ 0 and n + m ranges from 1 to 100.

b) partially hydrogenating the base polymer to a residual content of aliphatic double bonds of 0.2 to 2 milliequivalents per gram of polymer,
c) contacting the partially hydrogenated diene block copolymer with a peroxyacid to form an epoxidized polymer having between 0.1 and 5 milliequivalents of epoxide per gram of polymer

8. The polymer of claim 7, wherein the epoxidized diene block copolymer contains from 0.2 to 1.0 milliequivalents of epoxide per gram of polymer.

9. The polymer of claims 7 or 8, wherein the epoxidized diene block copolymer contains 0.5 or less milliequivalents of aliphatic double bonds per gram of polymer.

10. The polymer of any of claims 7 to 9, wherein the molecular weight of the A blocks ranges from 300 to 2,000 and the molecular weight of the B blocks ranges from 2,000 to 10,000.

11. An adhesive composition comprising a crosslinked polymer according to any one of the claims 1 to 6.

12. A sealant composition comprising a crosslinked polymer according to any one of the claims 1 to 6.

13. A coating composition comprising a crosslinked polymer according to any one of the claims 1 to 6.

14. A process for the preparation of a crosslinked epoxidized diene block copolymer according to any of claims 1 to 6 comprising the steps of:

a) providing a block copolymer comprising diene monomer units,

b) partially hydrogenating the base polymer to a residual content of aliphatic double bonds of 0.2 to 2 milliequivalents per gram of polymer,

c) contacting the partially hydrogenated diene block copolymer with a peroxyacid to form an epoxidized polymer having between 0.1 and 5 milliequivalents of epoxide per gram of polymer, and

d) chemically or by means of radiation energy crosslinking the epoxidized polymer through at least some of the epoxy functionality to form a crosslinked polymer which has sufficient gel content to provide increased resistance to temperature and/or organic solvents.

15. The process of claim 14, wherein the radiation energy is ionizing radiation and no photoinitiator is used.

16. The process of claim 15, wherein the ionizing radiation is electron beam radiation.

**Patentansprüche**

1. Vernetztes epoxidiertes Dienblockcopolymer, erhältlich nach einem Verfahren, das die folgenden Stufen umfaßt:

   a) Bereitstellen eines Blockcopolymers, das Dienmonomereinheiten umfaßt,
   b) partielles Hydrieren des Grundpolymers auf einen Restgehalt an aliphatischen Doppelbindungen von 0,2 bis 2 Milliäquivalenten je Gramm Polymer,
   c) Inkontaktbringen des partiell hydrierten Dienblockcopolymers mit einer Peroxysäure zur Ausbildung eines epoxidierten Polymers mit einem Gehalt an 0,1 bis 5 Milliäquivalenten Epoxid je Gramm Polymer und
   d) chemisches oder mittels Strahlungsenergie erfolgendes Vernetzen des epoxidierten Polymers über wenigstens einen Teil der Epoxyfunktionalität zur Ausbildung eines vernetzten Polymers, das einen ausreichenden Gelgehalt aufweist, um eine erhöhte Beständigkeit gegenüber Temperatur und/oder organischen Lösungsmitteln zu schaffen.

2. Polymer nach Anspruch 1, worin das in Stufe c) erhaltene unvernetzte epoxidierte Polymer 0,2 bis 1,0 Milliäquivalente Epoxid je Gramm Polymer enthält.

3. Polymer nach den Ansprüchen 1 oder 2, worin das in Stufe a) bereitgestellte Blockcopolymer durch Copolymerisieren eines oder mehrerer Olefine, einschließlich wenigstens eines konjugierten Diens, mit sich selbst oder mit einem oder mehreren alkenylaromatischen Kohlenwasserstoffmonomeren erhältlich ist.

4. Polymer nach Anspruch 3, worin das konjugierte Dien aus der aus 1,3-Butadien und Isopren bestehenden Gruppe ausgewählt ist und das alkenylaromatische Kohlenwasserstoffmonomer Styrol ist.

5. Polymer nach einem der Ansprüche 1 bis 4, worin das in Stufe a) bereitgestellte Dienblockcopolymer die allgemeine Formel

$$(A\text{-}B\text{-}A_p)_n\text{-}Y_r\text{-}(A_q\text{-}B)_m \qquad (I)$$

aufweist, worin

   - Y der Rest eines Kupplungsmittels oder eines Kupplungsmonomers ist,
   - A und B Polymerblöcke darstellen, die Homopolymerblöcke aus konjugierten Dienmonomeren, Copolymerblöcke aus konjugierten Dienmonomeren oder Copolymerblöcke aus konjugierten Dienmonomeren und monoalkenylaromatischen Kohlenwasserstoffmonomeren sein können, worin die Blöcke A eine größere Anzahl von tertiären Unsättigungs(TU)-Stellen pro Blockmasseneinheit aufweisen als die Blöcke B, wobei eine TU-Stelle eine aliphatische Doppelbindung zwischen einem tertiären Kohlenstoffatom und entweder einem primären oder einem sekundären Kohlenstoffatom ist,
   - die Blöcke A ein Molekulargewicht von 100 bis 3.000 aufweisen und die Blöcke B ein Molekulargewicht von 1.000 bis 15.000 aufweisen und
   - p und q den Wert 0 oder 1 haben und n > 0 ist, r den Wert 0 oder 1 hat, m ≥ 0 ist und n + m im Bereich von 1 bis 100 liegt.

6. Polymer nach Anspruch 5, worin das Molekulargewicht der Blöcke A im Bereich von 300 bis 2.000 liegt und das Molekulargewicht der Blöcke B im Bereich von 2.000 bis 10.000 liegt.

7. Epoxidiertes Dienblockcopolymer, erhältlich nach einem Verfahren, das die folgenden Stufen umfaßt:

a) Bereitstellen eines Blockcopolymers mit der allgemeinen Formel

$$(A\text{-}B\text{-}A_p)_n\text{-}Y_r\text{-}(A_q\text{-}B)_m \qquad (I),$$

worin

- Y der Rest eines Kupplungsmittels oder eines Kupplungsmonomers ist,
- A und B Polymerblöcke darstellen, die Homopolymerblöcke aus konjugierten Dienmonomeren, Copolymerblöcke aus konjugierten Dienmonomeren oder Copolymerblöcke aus konjugierten Dienmonomeren und monoalkenylaromatischen Kohlenwasserstoffmonomeren sein können, worin die Blöcke A eine größere Anzahl von tertiären Unsättigungs(TU)-Stellen pro Blockmasseneinheit aufweisen als die Blöcke B, wobei eine TU-Stelle eine aliphatische Doppelbindung zwischen einem tertiären Kohlenstoffatom und entweder einem primären oder einem sekundären Kohlenstoffatom ist,
- die Blöcke A ein Molekulargewicht von 100 bis 3.000 aufweisen und die Blöcke B ein Molekulargewicht von 1.000 bis 15.000 aufweisen und
- p und q den Wert 0 oder 1 haben und n > 0 ist, r den Wert 0 oder 1 hat, m ≥ 0 ist und n + m im Bereich von 1 bis 100 liegt,

b) partielles Hydrieren des Grundpolymers auf einen Restgehalt an aliphatischen Doppelbindungen von 0,2 bis 2 Milliäquivalenten je Gramm Polymer,

c) Inkontaktbringen des partiell hydrierten Dienblockcopolymers mit einer Peroxysäure zur Ausbildung eines epoxidierten Polymers mit einem Gehalt an 0,1 bis 5 Milliäquivalenten Epoxid je Gramm Polymer.

8. Polymer nach Anspruch 7, worin das epoxidierte Dienblockcopolymer von 0,2 bis 1,0 Milliäquivalente Epoxid je Gramm Polymer enthält.

9. Polymer nach den Ansprüchen 7 oder 8, worin das epoxidierte Dienblockcopolymer 0,5 oder weniger Milliäquivalente aliphatische Doppelbindungen je Gramm Polymer enthält.

10. Polymer nach einem der Ansprüche 7 bis 9, worin das Molekulargewicht der Blöcke A im Bereich von 300 bis 2.000 liegt und das Molekulargewicht der Blöcke B im Bereich von 2.000 bis 10.000 liegt.

11. Klebstoffzusammensetzung, umfassend ein vernetztes Polymer nach einem der Ansprüche 1 bis 6.

12. Dichtmittelzusammensetzung, umfassend ein vernetztes Polymer nach einem der Ansprüche 1 bis 6.

13. Überzugszusammensetzung, umfassend ein vernetztes Polymer nach einem der Ansprüche 1 bis 6.

14. Verfahren zur Herstellung eines vernetzten epoxidierten Dienblockcopolymers nach einem der Ansprüche 1 bis 6, das die folgenden Stufen umfaßt:

a) Bereitstellen eines Blockcopolymers, das Dienmonomereinheiten umfaßt,
b) partielles Hydrieren des Grundpolymers auf einen Réstgehalt an aliphatischen Doppelbindungen von 0,2 bis 2 Milliäquivalenten je Gramm Polymer,
c) Inkontaktbringen des partiell hydrierten Dienblockcopolymers mit einer Peroxysäure zur Ausbildung eines epoxidierten Polymers mit einem Gehalt an 0,1 bis 5 Milliäquivalenten Epoxid je Gramm Polymer und
d) chemisches oder mittels Strahlungsenergie erfolgendes Vernetzen des epoxidierten Polymers über wenigstens einen Teil der Epoxyfunktionalität zur Ausbildung eines vernetzten Polymers, das einen ausreichenden Gelgehalt aufweist, um eine erhöhte Beständigkeit gegenüber Temperatur und/oder organischen Lösungsmitteln zu schaffen.

15. Verfahren nach Anspruch 14 wobei die Strahlungsenergie eine ionisierende Strahlung ist und wobei kein Photoinitiator benutzt wird.

16. Verfahren nach Anspruch 14 wobei die ionisierende Strahlung ein Elektronenstrahl ist.

**Revendications**

1. Copolymère bloc de diène époxydé réticulé qui est obtenable par un procédé comprenant les étapes suivantes:

   a) la formation d'un copolymère bloc comprenant des unités de monomère de diène,
   b) l'hydrogénation partielle du polymère de base à une teneur résiduelle de doubles liaisons aliphatiques de 0,2 à 2 milliéquivalents par gramme de polymère,
   c) la mise en contact du copolymère bloc de diène partiellement hydrogéné avec un peroxyacide pour former un polymère époxydé ayant entre 0,1 et 5 milliéquivalents d'époxyde par gramme de polymère, et
   d) la réticulation chimique ou au moyen d'une énergie de rayonnement du polymère époxydé par l'intermédiaire d'au moins une certaine partie de la fonctionnalité époxy pour former un polymère réticulé qui a une teneur en gel suffisante pour conférer une résistance accrue à la température et/ou aux solvants organiques.

2. Polymère suivant la revendication 1, dans lequel le polymère époxydé non réticulé obtenu dans l'étape c) contient 0,2 à 1,0 milliéquivalent d'époxyde par gramme de polymère.

3. Polymère suivant l'une ou l'autre des revendications 1 et 2, dans lequel le copolymère bloc formé dans l'étape a) est obtenable par copolymérisation d'une ou de plusieurs oléfines, notamment au moins un diène conjugué, en tant que telles ou avec un ou plusieurs monomères d'hydrocarbure alcényl aromatique.

4. Polymère suivant la revendication 3, dans lequel le diène conjugué est choisi dans le groupe comprenant le 1,3-butadiène et l'isoprène et le monomère d'hydrocarbure alcényl aromatique est le styrène.

5. Polymère suivant l'une quelconque des revendications 1 à 4, dans lequel le copolymère bloc de diène formé dans l'étape (a) a la formule générale :

$$(A\text{-}B\text{-}A_p)_n\text{-}Y_r\text{-}(A_q\text{-}B)_m \tag{1}$$

   - dans laquelle Y est le résidu d'un agent de couplage ou d'un monomère de couplage,
   - A et B sont des blocs de polymère qui peuvent être des blocs d'homopolymère de monomères de diène conjugué, des blocs de copolymère de monomères de diène conjugué ou des blocs de copolymère de monomères de diène conjugué et de monomères d'hydrocarbure monoalcényl aromatique, dans lesquels les blocs A ont un plus grand nombre de sites d'insaturation tertiaire (IT) par unité de masse de blocs que les blocs B, où un site d'IT est une double liaison aliphatique entre un atome de carbone tertiaire et un atome de carbone primaire ou secondaire,
   - les blocs A ont un poids moléculaire de 100 à 3.000 et les blocs B ont un poids moléculaire de 1.000 à 15.000, et
   - p et q sont égaux à 0 ou 1 et n>0, r est égal à 0 ou 1, m≥0 et n + m vaut de 1 à 100.

6. Polymère suivant la revendication 5, dans lequel le poids moléculaire des blocs A va de 300 à 2.000 et le poids moléculaire des blocs B va de 2.000 à 10.000.

7. Copolymère bloc de diène époxydé qui est obtenable par un procédé comprenant les étapes suivantes:

   a) la formation d'un copolymère bloc ayant la formule générale:

$$(A\text{-}B\text{-}A_p)_n\text{-}Y_r\text{-}(A_q\text{-}B)_m \tag{1}$$

   - dans laquelle Y est le résidu d'un agent de couplage ou d'un monomère de couplage,
   - A et B sont des blocs de polymère qui peuvent être des blocs d'homopolymère de monomères de diène conjugué, des blocs de copolymère de monomères de diène conjugué ou des blocs de copolymère de monomères de diène conjugué et de monomères d'hydrocarbure monoalcényl aromatique, dans lesquels les blocs A ont un plus grand nombre de sites d'insaturation tertiaire (IT) par unité de masse de blocs que les blocs B, où un site d'IT est une double liaison aliphatique entre un atome de carbone tertiaire et un atome de carbone primaire ou secondaire,
   - les blocs A ont un poids moléculaire de 100 à 3.000 et les blocs B ont un poids moléculaire de 1.000 à 15.000, et

- p et q sont égaux à 0 ou 1 et n>0, r est égal à 0 ou 1, m≥0 et n + m vaut de 1 à 100,

b) l'hydrogénation partielle du polymère de base à une teneur résiduelle de doubles liaisons aliphatiques de 0,2 à 2 milliéquivalents par gramme de polymère,

c) la mise en contact du copolymère bloc de diène partiellement hydrogéné avec un peroxyacide pour former un polymère époxydé ayant entre 0,1 et 5 milliéquivalents d'époxyde par gramme de polymère.

8. Polymère suivant la revendication 7, dans lequel le copolymère bloc de diène époxydé contient de 0,2 à 1,0 milliéquivalent d'époxyde par gramme de polymère.

9. Polymère suivant l'une ou l'autre des revendications 7 et 8, dans lequel le copolymère bloc de diène époxydé contient 0,5 milliéquivalent ou moins de doubles liaisons aliphatiques par gramme de polymère.

10. Polymère suivant l'une quelconque des revendications 7 à 9, dans lequel le poids moléculaire des blocs A va de 300 à 2.000 et le poids moléculaire des blocs B va de 2.000 à 10.000.

11. Composition d'adhésif comprenant un polymère réticulé suivant l'une quelconque des revendications 1 à 6.

12. Composition d'étanchéité comprenant un polymère réticulé suivant l'une quelconque des revendications 1 à 6.

13. Composition de revêtement comprenant un polymère réticulé suivant l'une quelconque des revendications 1 à 6.

14. Procédé de préparation d'un copolymère bloc de diène époxydé réticulé suivant l'une quelconque des revendications 1 à 6 comprenant les étapes suivantes:

a) la formation d'un copolymère bloc comprenant des unités de monomère de diène,

b) l'hydrogénation partielle du polymère de base à une teneur résiduelle de doubles liaisons aliphatiques de 0,2 à 2 milliéquivalents par gramme de polymère,

c) la mise en contact du copolymère bloc de diène partiellement hydrogéné avec un peroxyacide pour former un polymère époxydé ayant entre 0,1 et 5 milliéquivalents d'époxyde par gramme de polymère, et

d) la réticulation chimique ou au moyen d'une énergie de rayonnement du polymère époxydé par l'intermédiaire d'au moins une certaine partie de la fonctionnalité époxy pour former un polymère réticulé qui a une teneur en gel suffisante pour conférer une résistance accrue à la température et/ou aux solvants organiques.

15. Procédé selon la revendication 14 dans lequel l'énergie de rayonnement est un rayonnement ionisant et aucun photoinitiateur n'est utilisé.

16. Procédé selon la revendication 14 dans lequel l'énergie de rayonnement est un rayonnement de faisceau d'électrons.